# EUROPEAN PATENT APPLICATION

(11) **EP 2 037 343 A1**
(43) Date of publication of application: **18.03.2009**
(21) Application number: 07767551.0
(22) Date of filing: 26.06.2007
(51) Int. Cl.: G05B 19/418, G06Q 50/00

(54) **PRODUCTION MANAGEMENT SYSTEM, PRODUCTION MANAGEMENT METHOD, AND STORAGE MEDIUM CONTAINING PRODUCTION PROGRAM FOR EXECUTING THE PRODUCTION MANAGEMENT METHOD**

(30) Priority: 28.06.2006 JP 2006177787
(71) Applicant: Class Technology Co., Ltd., Shibuya-ku, Tokyo 151-0053 (JP)
(72) Inventor: YOTSUKURA, Mikio, Tokyo 151-0053 (JP); YOKOYAMA, Hiroshi, Tokyo 151-0053 (JP)
(74) Representative: Townsend, Stephen
(86) International application number: PCT/JP2007/062745
(87) International publication number: WO 2008/001743

(57) **Abstract**

There is provided a production management system that can easily build a production system of each finished product without requiring the time and labor for management of production factors. In a production management system (10), A computer (11) extracts each of the production factors required for building the production system from factor-type databases (13, 14, 15, 16), and connects the production factors extracted from the factor-type databases (13, 14, 15, 16) in series from a superordinate concept toward a subordinate concept according to a two-term relationship and a three-term relationship stored in a relational database (17) to thereby execute production system building means for forming the production system corresponding to the finished product.

## Description

### TECHNICAL FIELD

The present invention relates to a production management system, in which a production system of each finished product is built from a combination of various production factors, the factor branching into a plurality of factors from a superordinate concept toward a subordinate concept, and further, relates to a production management method that builds a production system of each finished product from a combination of various production factors, and a computer-readable storage medium that stores a production management program for causing a computer to execute the production management method.

### BACKGROUND ART

There is a production management system provided with a first business management system for executing applications concerning a first business, a second business management system for executing applications concerning a second business, and an integrated database that integrates information on the first business management system and information on the second business management system to store data, and holds the data so that items displayed by the applications concerning the first business and the applications concerning the second business may be different (refer to Patent Document 1). The integrated database is formed of an item master having item display information which is information on whether or not the items are displayed by the applications concerning the first business and the applications concerning the second business, and a configuration master that stores configuration information on each item. Information on a drawing or a site of an engineering communication sheet corresponding to the item, and attribute display information which is information on whether or not the drawing or the engineering communication sheet is displayed by the applications concerning the first business and the applications concerning the second business are stored in the item master. Information on items higher than the item is stored in the configuration master. In the production management system, the items are linked with each other by an upper/lower two-term relationship, and the items are connected in one line from a superordinate concept toward a subordinate concept thereof according to the two-term relationship, so that the production system of the finished product is built.
Patent Document 1: Japanese Unexamined Patent Publication (Kokai) No. H11-296586

### DISCLOSURE OF THE INVENTION

### PROBLEM TO BE SOLVED BY THE INVENTION

Incidentally, when the production system of the each finished product is sequentially built only from the upper/lower two-term relationship as the production management system disclosed in the patent publication, it is difficult to represent the production system for every specific condition. When the production system for every specific condition is represented only by the upper/lower two-term relationship, the production factor which should be used in common with each production system must be individually managed for every production system, and the production system cannot be managed in an integrated fashion, thus the useless time and labor is required for building and managing the production system. In addition, when the production system is sequentially formed in time series while individually managing the production factors, various production systems are formed one after another for every department, and the number of production factors are unlimitedly increased, thus making it impossible to manage a huge number of increased production factors. Further, when each item that forms the production system is altered, it is necessary to extract items to be altered from the production system stored in the databases of all the departments, and to alter the items for every department to thereby build a production system newly, thus a large amount of time and labor must be spent on rebuilding the production system involved in alteration of the items.

An object of the present invention is to provide a production management system and a production management method, in which the time and labor is not required for managing production factors, and a production system of each finished product can be easily built. Another object of the present invention is to provide a production management system and a production management method, in which even when production factors are altered, a production system of a finished product can be easily built using the altered production factors. Further, another object of the present invention is to provide a computer-readable storage medium that stores a production management program for causing a computer to execute the production management method.

### MEANS FOR SOLVING THE PROBLEM

The premise of the present invention for solving the aforementioned problems is a production management system that builds a production system of a finished product from a combination of various production factors, the factor branching into a plurality of factors from a superordinate concept toward a subordinate concept.

The present invention in the premise is characterized in that production factors are linked with each other by an upper/lower two-term relationship between an arbitrary first production factor and a second production factor lying just below the first production factor and also are linked with each other by an upper/lower three-term relationship among the first and second production factors and a third production factor lying just below the second production factor, the production management system is provided with a plurality of factor-type databases that classify and store the production factors for every type thereof, and a relational database that stores the two-term relationship and the three-term relationship, and uses the production factors to execute production system building means for building a production system of each finished product, the production system building means extracts each of the production factors required for building the production system, from the factor-type databases, and connects the production factors extracted from the factor-type databases in series from a superordinate concept toward a subordinate concept thereof according to the two-term relationship and the three-term relationship stored in the relational database to thereby form the production system corresponding to each finished product.

As one example of the production management system, first to n-th factor-type numbers for specifying a type of the production factor are individually given to these production factors, the factor-type database is classified into first to n-th factor-type databases corresponding to the first to n-th factor-type numbers, these production factors are stored in the first to n-th factor-type databases based on the first to n-th factor-type numbers, and the production system building means extracts each of the production factors required for building the production system from the first to n-th factor-type databases based on the first to n-th factor-type numbers.

As another example of the production management system, the system has production system storing means for storing the production system built by the production system building means, and production system outputting means for outputting the built production system.

As another example of the production management system, the departmental numbers for sorting the production factors by department are individually given to these production factors, and the production system outputting means outputs the departmental production system formed only of the required production factors for every department based on the departmental number.

As another example of the production management system, in the system, the production factors stored in the factor-type databases can be altered and the first to third production factors stored in the relational database can be altered, and when the production factors and the first to third production factors are altered, the production system building means uses altered new production factors to rebuild a production system of each finished product according to a new two-term relationship and three-term relationship formed of altered first to third production factors.

As another example of the production management system, the system has two-term/three-term converting means for converting the two-term relationship stored in the relational database into the three-term relationship, and three-term/two-term converting means for converting the three-term relationship stored in the relational database into the two-term relationship.

The second premise of the present invention for solving the aforementioned problems is a production management method that extracts each of the production factors required for building the production system from a plurality of factor-type databases in which the production factors are classified and stored for every type thereof, extracts a two-term relationship from a relational database in which the two-term relationship between the production factors linked with each other by an upper/lower two-term relationship between an arbitrary first production factor and a second production factor lying just below the first production factor is stored and also extracts a three-term relationship from the relational database in which the three-term relationship among the production factors linked with each other by an upper/lower three-term relationship among the first and second production factors, and a third production factor lying just below the second production factor is stored, connects these production factors extracted from the factor-type databases in series from a superordinate concept toward a subordinate concept thereof according to the two-term relationship and the three-term relationship to thereby build the production system corresponding to each finished product, and stores and outputs the built production system.

As one example of the production management method, first to n-th factor-type numbers for specifying a type of the production factor are individually given to these production factors, the factor-type database is classified into first to n-th factor-type databases corresponding to the first to n-th factor-type numbers, these production factors are stored in the first to n-th factor-type databases based on the first to n-th factor-type numbers, and the production management method extracts each of the production factors required for building the production system from the first to n-th factor-type databases based on the first to n-th factor-type numbers.

As another example of the production management method, the departmental numbers for sorting the production factors by department are individually given to these production factors, and the production management method outputs the departmental production system formed only of the required production factors for every department based on the departmental number.

As another example of the production management method, in the production management method, the production factors stored in the factor-type databases can be altered and the first to third production factors stored in the relational database can be altered, and when the production factors and the first to third production factors are altered, altered new production factors are used to rebuild a production system of each finished product according to a new two-term relationship and three-term relationship formed of altered first to third production factors.

As another example of the production management method, the production management method converts the two-term relationship stored in the relational database into the three-term relationship, and also converts the three-term relationship stored in the relational database into the two-term relationship.

The third premise of the present invention for solving the aforementioned problems is a computer-readable storage medium that stores a production management program for causing a computer to execute a production management method that extracts each of the production factors required for building the production system from a plurality of factor-type databases in which the production factors are classified and stored for every type thereof, extracts a two-term relationship from a relational database in which the two-term relationship between the production factors linked with each other by an upper/lower two-term relationship between an arbitrary first production factor and a second production factor lying just below the first production factor is stored and also extracts a three-term relationship from the relational database in which the three-term relationship among the production factors linked with each other by an upper/lower three-term relationship among the first and second production factors, and a third production factor lying just below the second production factor is stored, connects these production factors extracted from the factor-type databases in series from a superordinate concept toward a subordinate concept thereof according to the two-term relationship and the three-term relationship to thereby build the production system corresponding to each finished product, and stores and outputs the built production system.

### EFFECT OF THE INVENTION

According to the production management system and the production management method in accordance with the present invention, each of the production factors required for building the production system is extracted from a plurality of factor-type databases in which the production factors are classified and stored for every type thereof, and the production factors extracted from the factor-type databases are connected in series from a superordinate concept toward a subordinate concept thereof according to the two-term relationship and the three-term relationship stored in the relational database to thereby build the production system corresponding to each finished product, so that it is not necessary for each of the departments to individually manage each production factor, and for each of the departments to uniquely form the production system, thus making it possible to save the useless time and labor due to building a huge number of production systems which are different from each other for every department. The production management system and the production management method can form the production system that can be shared by each of the departments based on each of the production factors stored in the factor-type databases, and the two-term relationship and the three-term relationship stored in the relational database, while each of the departments shares the factor-type databases and the relational database, the production system can be managed in an integrated fashion, and the built production system can also be provided to each of the departments in real time. Meanwhile, if the production system is built only by the two-term relationship, a plurality of second production factors whose factor-type is different from that of the first production factor may be linked just below the first production factor to thereby build a plurality of different production systems to the same finished product, thus the production system for every specific condition cannot be represented. In the production management system and production management method, however, the specific second production factor is linked just below the first production factor and the specific third production factor is also linked just below the second production factor, by adding the three-term relationship to the two-term relationship, only the production system of the specific condition corresponding to each finished product can be built using these production factors.

In the production management system and the production management method that extracts each of the production factors required for building the production system from the first to n-th factor-type databases based on the first to n-th factor-type numbers, since each of the production factors is classified into the first to n-th factor-type databases based on the first to n-th factor-type numbers given thereto and is stored in these factor-type databases, it is possible to group for every factor-type each of the production factors that each department can share according to the first to n-th databases to manage the same in an integrated fashion, thus making it possible to save the time and the labor required for each of the departments to manage these production factors individually. In the production management system and the production management method, it is possible to form the production system which can be shared by each department, from each of the production factors stored in the first to n-th factor-type databases, while each department shares the relational database and the first to the n-th factor-type databases, thus allowing the production system to be managed in an integrated fashion.

In the production management system and the production management method that output the departmental production system formed only of the required production factors for every department based on the department number, since the production system that includes only the production factors required to be displayed to each department is outputted, the production factor that is not required to be displayed to each department can be omitted from the production system, and it is possible to provide to the department in real time the production system with high utility value, which is easy to be used for every department. In the production management system and the production management method, the production system formed only of the production factors that each department requires for it can be utilized, thus allowing the working efficiency of each department to be improved.

In the production management system and the production management method, in which when the production factors stored in the factor-type databases and the first to third production factors stored in the relational database are altered, the production system is rebuilt according to the new two-term relationship and three-term relationship, while using the altered production factors, the alteration of the production factors can be managed in an integrated fashion based on the factor-type databases, and the alteration of the first to third production factors can be managed in an integrated fashion based on the relational database. In the production management system and the production management method, the production system that can be shared by each department can be easily formed according to the two-term relationship and the three-term relationship formed of the altered first to third production factors, while using the altered production factors. Moreover, in the production management system and the production management method, it is not necessary to alter the production factors and the first to third production factors for every department to rebuild the production system, thus making it possible to save the time and the labor required for each department to alter the production factors and to alter the first to third production factors.

In the production management system and the production management method in which the two-term relationship stored in the relational database is converted into the three-term relationship, converting the two-term relationship into the three-term relationship after storing the two-term relationship in the relational database allows to easily form the three-term relationship among the production factors from the two-term relationship, thus making it possible to save the time and labor required for forming three-term relationship from the start.

In the computer-readable storage medium that stores the production management program for causing the computer to execute the production management method, installing the production management program stored therein in the computer as required allows the production system corresponding to each finished product to be built in real time, irrespective of the factor-type of the finished product.

### BRIEF DESCRIPTION OF THE DRAWINGS

Fig. 1 is a schematic configuration view of a production management system shown as one example;
Fig. 2 is a view showing an interrelationship between a two-term relationship and a three-term relationship stored in a relational database;
Fig. 3 is a view for describing the two-term relationship between production factors stored in the relational database;
Fig. 4 is a view for describing integration of different types of two-term relationships;
Fig. 5 is a view for describing the three-term relationship among production factors stored in the relational database;
Fig. 6 is a view for describing integration of different types of three-term relationships;
Fig. 7 is a view for describing the two-term relationship and the three-term relationship between and among the production factors stored in the relational database;
Fig. 8 is a view for describing integration of the two-term relationship with the three-term relationship;
Fig. 9 is a view for describing a two-term/three-term conversion, and a three-term/two-term conversion; and
Fig. 10 is a view showing a production system outputted for every department.

### EXPLANATIONS OF LETTERS OR NUMERALS

- 10:: production management system
- 11:: computer
- 12:: integrated management database
- 13:: item database (first factor-type database)
- 14:: result database (second factor-type database)
- 15:: process database (third factor-type database)
- 16:: site database (fourth factor-type database)
- 17:: relational database
- 18:: design department
- 19:: manufacturing department
- 20:: purchasing department
- 21:: logistics department

### BEST MODE(S) FOR CARRYING OUT THE INVENTION

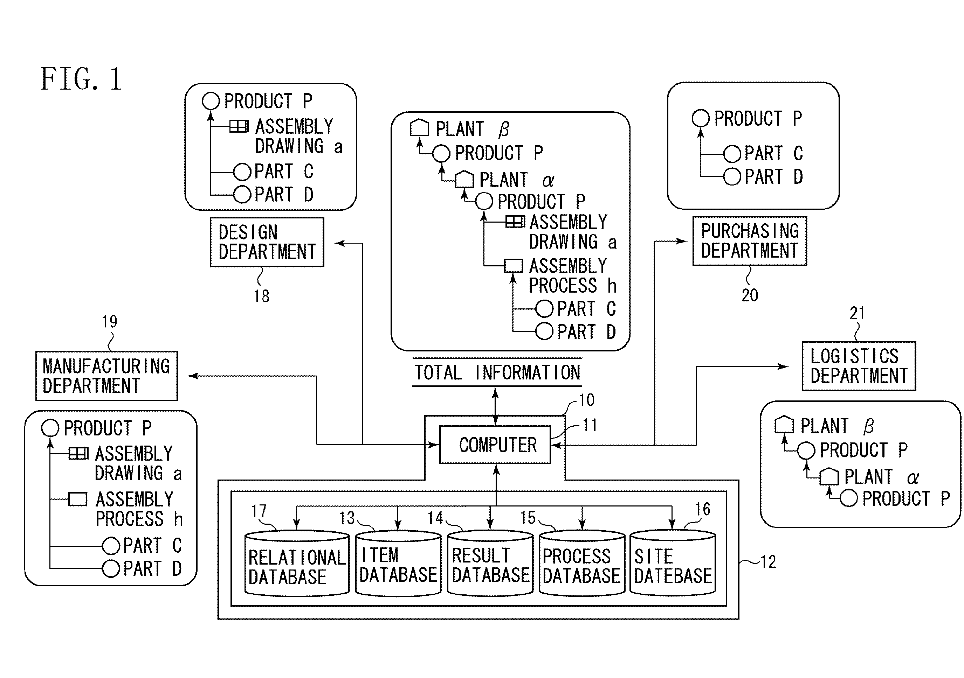

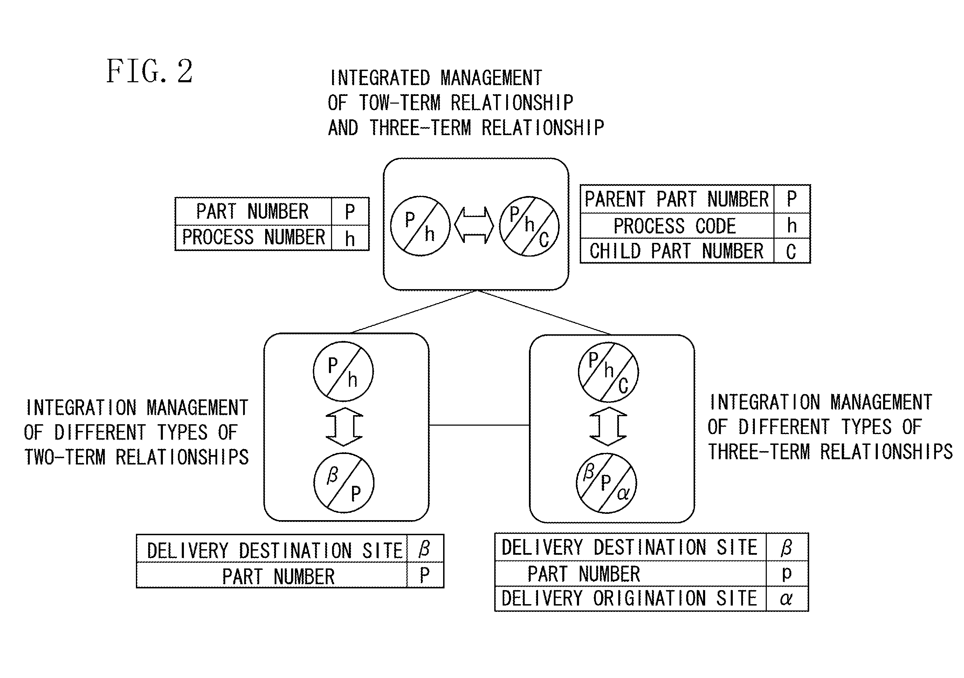

Referring to the appended drawings, details of a production management system and a production management method in accordance with the present invention will be described as follows. Fig. 1 is a schematic configuration view of a production management system 10 shown as one example, while Fig. 2 is a view showing an interrelationship between a two-term relationship and a three-term relationship stored in a relational database 17. In Fig. 1, the whole built production system is shown, in which the production system formed only from production factors required for each department of a design department 18, a manufacturing department 19, a purchasing department 20, and a logistics department 21 is further shown. It is noted that the departments are not limited to those shown in the figure, but all the other departments forming the organization are included therein. Additionally, although not shown, a terminal device (computer) connected to a computer 11 via an interface (wire or wireless) is arranged in each department.

The production management system 10 is formed of the computer 11, and an integrated management database 12 for centrally controlling data of the production factors or the like. The computer 11 extracts required data from the integrated management database 12, and stores data in the database 12 as required. The integrated management database 12 is connected to the computer 11 via an interface (wire or wireless). The integrated management database 12 is provided with a data processing function, and is formed of first to fourth factor-type databases 13, 14, 15, and 16 for storing individual production factors, and the relational database 17 for storing a two-term relationship and a three-term relationship among the production factors. The integrated management database 12 transfers data from the computer 11 to the computer 11 based on a data transfer instruction, and stores data therein based on a data storage instruction of the computer 11. Here, the production factor indicates each element indispensable to manufacturing of a finished product. The production factor includes a product P, a plant α, a plant β, an assembly drawing a, an assembly process h, a part C, and a part D as shown in Fig. 1. It is to be noted that the production factors shown in Fig. 1 represent one example thereof, and the production factors are not limited them shown therein. For example, the production factor may include a product Q, a plant γ, a plant δ, an assembly drawing b, an assembly process i, a part A, and a part B in addition to those, and the production factor may also include a product R, a plant ε, an assembly drawing c, an assembly drawing d, an assembly process j, an assembly process k, a part E, a part F, and a part G. Further, production factors composed of other terms may be included.

A factor-type number (first to n-th factor-type numbers) for specifying a type of these factors, and a departmental number for sorting these factors by department are given to each production factor individually. The type of the production factor includes an item (part) for constituting a finished product, a process (assembly process and treatment process) for manufacturing the finished product, a result (assembly drawing) which is a design drawing of the finished product, and a site (plant) for indicating a location to implement each process. Here, the first factor-type number is given to each part indicating the item, the second factor-type number is given to each assembly process indicating the process, the third factor-type number is given to each assembly drawing indicating the result, and the fourth factor-type number is given to each plant indicating the site. It is to be noted that the types of the production factor are not limited to the item, the process, the result, and the site. The type of the production factor includes all the other types required to manufacture the finished product, where fifth to n-th identification numbers for specifying the finished product are given to the other types. The departmental number includes a design department identification number, a manufacturing department identification number, a purchasing department identification number, a logistics department identification number, or the like.

The computer 11 has a central processing unit (CPU or MPU) and a storage unit, and incorporates a high-capacity hard disk therein. Although not shown, input devices, such as a keyboard, a mouse, and the like, and output devices, such as a display, a printer, and the like are connected to the computer 11 via the interface (wire or wireless). A production management program for executing each means of this system is stored in an internal address file of the storage unit, and a production management program for managing the two-term relationship and the three-term relationship is stored therein. It is to be noted that the production management program is installed in the storage unit of the computer 11 from an optical disk (storage medium), such as a CD-ROM or the like, which has stored the program. Incidentally, a semiconductor memory and a magnetic disk other than the optical disk may also be used for the storage medium. The central processing unit of the computer 11 activates the production management program stored in the internal address file of the storage unit, and executes each means, such as production system building means for building the production system corresponding to each finished product in real time, production system storing means for storing the built production system in the storage unit, production system outputting means for outputting the built production system via the output device, two-term/three-term converting means, three-term/two-term converting means, and the like, according to the production management program. Further, it performs integrated management of different types of two-term relationships (two-term relationship integrating means), integrated management of different types of three-term relationships (three-term relationship integrating means), and integrated management of the two-term and three-term relationships (two-term and three-term relationships integrating means), while utilizing the relational database. Input devices, such as a keyboard, a mouse, and the like, and output devices, such as a display, a printer, or the like are also connected to a terminal device arranged in each of the departments 18, 19, 20, and 21.

The factor-type database is of a high-capacity hard disk, and is classified into an item database 13 (first factor-type database) corresponding to the first factor-type number, a result database 14 (second factor-type database) corresponding to the second factor-type number, a process database 15 (third factor-type database) corresponding to the third factor-type number, and a site database 16 (fourth factor-type database) corresponding to the fourth factor-type number. Incidentally, the factor-type databases are not limited to those described above, but fifth to n-th factor-type databases for classifying and storing other production factors indispensable to manufacturing of the finished product for every factor-type may be arranged. Data of the parts (part A, part B, part C, part D, part E, part F, part G, and the like), which constitute the finished product is stored in the item database 13, and data of the results (assembly drawing a, assembly drawing b, assembly drawing c, assembly drawing d, and the like), which are the design drawings of the finished product is stored in the result database 14. Data of the processes (assembly process h, assembly process i, assembly process j, treatment process k, and the like) for manufacturing the finished product is stored in the process database 15, and data of the site (plant α, plant β, plant γ, plant δ, and the like) for indicating the location to implement each process is stored in the site database 16.

When a predetermined part is inputted into an item area among production factor input areas displayed on the display via the input device and a department classification is also inputted into a department-type area, the computer 11 applies the first factor-type number and the departmental number to the part to then store part data in the item database 13 based on the first factor-type number. When a predetermined assembly drawing is inputted into an result area among the production factor input areas and a department classification is also inputted into a department-type area, the computer 11 applies the second factor-type number and the departmental number to the assembly drawing to then store assembly drawing data in the result database 14 based on the second factor-type number. When a predetermined assembly process and treatment process is inputted into a process area among the production factor input areas and the department classification is also inputted into the department-type area, the computer 11 applies the third factor-type number and the departmental number to these processes to then store assembly process data and treatment process data in the process database 15 based on the third factor-type number. When a predetermined plant is inputted into a site area among the production factor input areas and the department classification is also inputted into the department-type area, the computer 11 applies the fourth factor-type number and the departmental number to the plant to then store plant data in the site database 16 based on the fourth factor-type number.

The relational database 17 is of a high-capacity hard disk, in which an upper/lower two-term relationship between production factors is stored, and an upper/lower three-term relationship among production factors is stored. When the two-term relationship between the production factors is inputted into a relational area displayed on the display via the input device, the computer 11 stores the two-term relationship in the relational database 17. When the three-term relationship among the production factors is inputted into the relational area, the computer 11 stores the three-term relationship in the relational database 17.

This system 10 integrally manages different types of two-term relationships, integrally manages different types of three-term relationships, and further integrally manages the two-term relationship and the three-term relationship. For example, when the two-term relationship between the product P and the assembly process h and the two-term relationship between the site β and the product P are stored in the relational database 17, and the three-term relationship among the product P, the assembly process h and the part C and the three-term relationship among the site β, the product P, and the site α are stored therein as shown in Fig. 2, different types of two-term relationships of the two-term relationship between the product P and the assembly process h, and the two-term relationship between the site β and the product P can be integrated into one, and different types of three-term relationships of the three-term relationship among the product P, the assembly process h, and the part C, and the three-term relationship among the site β, the product P, and the site α can be integrated into one. Further, the two-term relationship between the product P and the assembly process h, and the three-term relationship among the product P, the assembly process h, and the part C can be integrated into one.

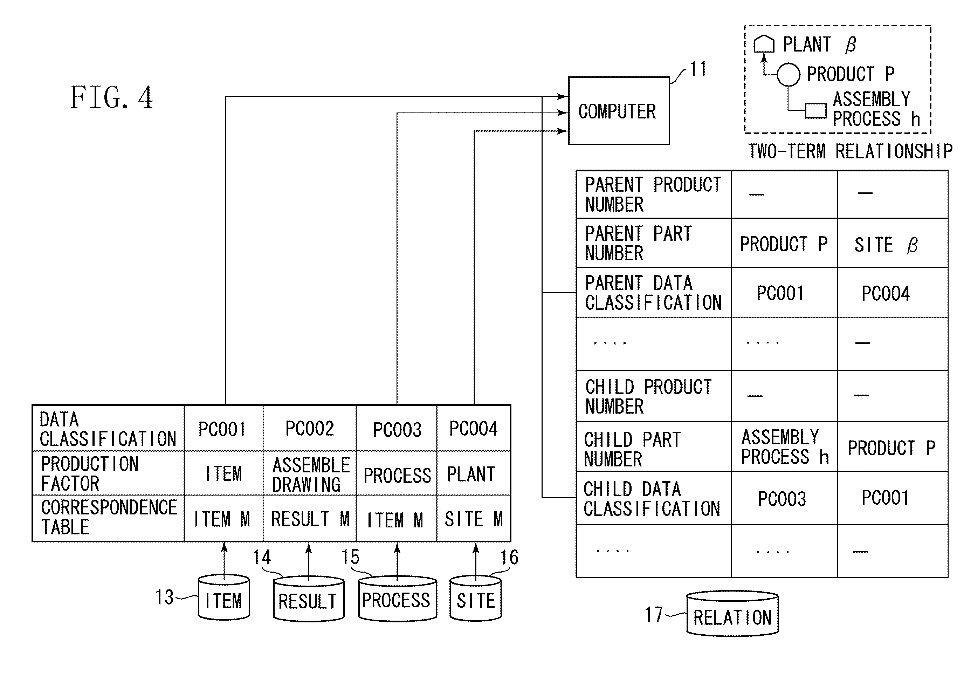

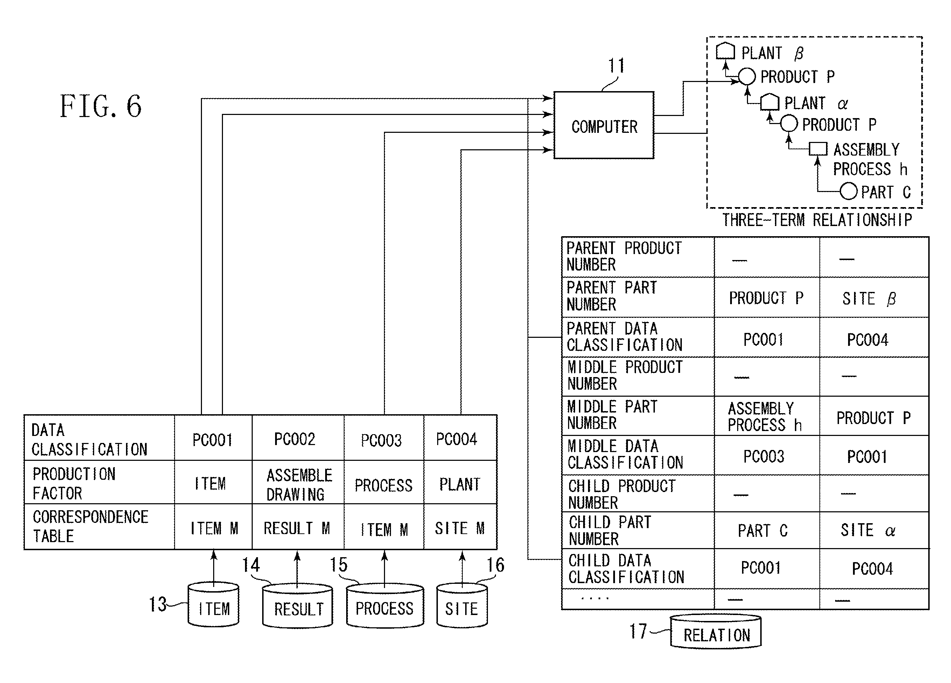

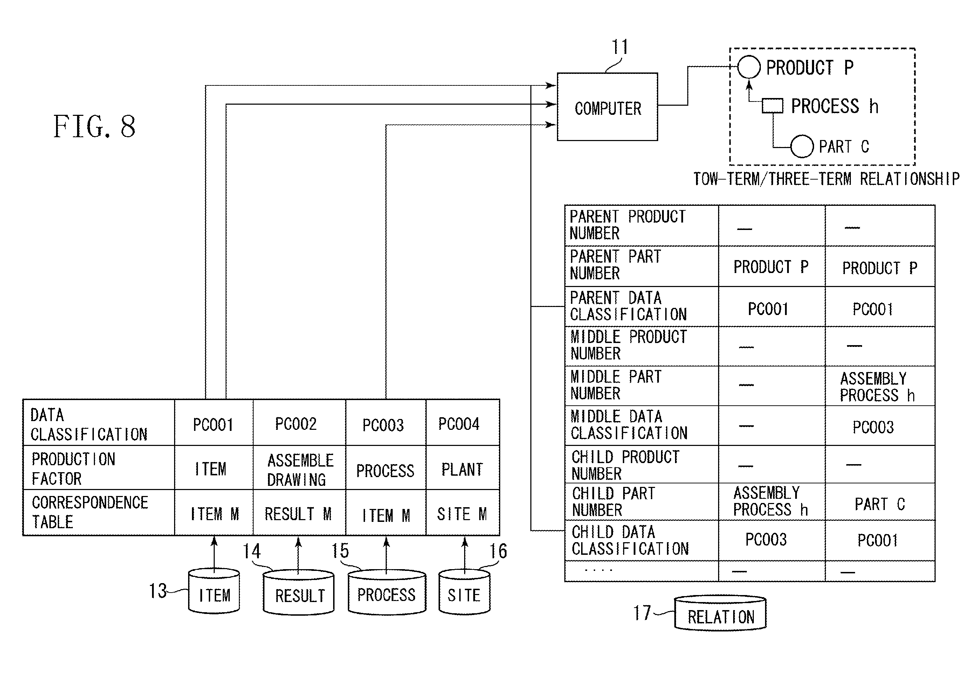

Integrating different types of two-term relationships makes it possible to build the production system in which the site β, the product P, and the assembly process h are connected in series. In the production system in which the site β, the product P, and the assembly process h are connected in series, the site β is located at the top, the assembly process h is located at the bottom, the product P is located in the middle between the site β and the assembly process h (refer to Fig. 4). Additionally, integrating different types of three-term relationships makes it possible to build the production system in which the site β, the product P, the site α, the product P, the assembly process h, and the part C are connected in series. In the production system in which the site β, the product P, the site α, the product P, the assembly process h, and the part C are connected in series, the site β is located at the top, and respective production factors of the product P, the site α, the product P, the assembly process h, and the part C are sequentially located in a line from the site β (refer to Fig. 6). Integrating the two-term relationship and the three-term relationship makes it possible to build the production system in which the product P, the assembly process h, and the part C are connected in series. In the production system in which the product P, the assembly process h, and the part C are connected in series, the product P locates at the top, the part C locates at the bottom, and the assembly process h is located in the middle between the product P and the part C (refer to Fig. 8).

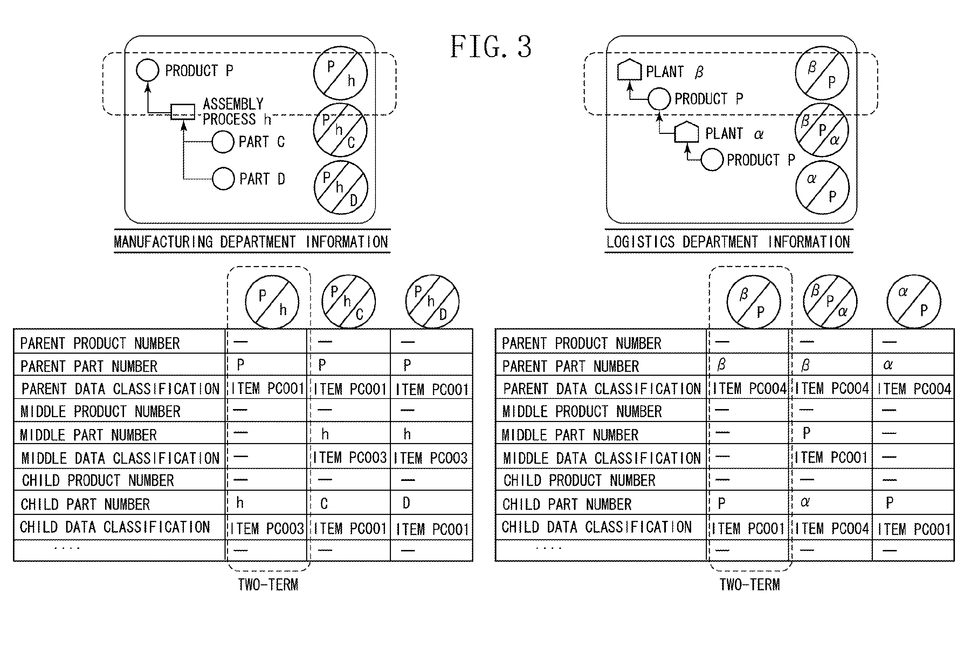

Fig. 3 is a view for describing the two-term relationship between the production factors stored in the relational database 17, while Fig. 4 is a view for describing the integration of different types of two-term relationships. In Fig. 3, manufacturing department information and logistics department information will be exemplified, and the two-term relationship used for the description will be shown within the dotted lines. The two-term relationship and the integration of different types of two-term relationships will be described as follows based on Figs. 3 and 4. In the two-term relationship (child-parent relationship), the production factors are linked by an arbitrary first production factor (parent) and a second production factor (child) lying just below the first production factor. By the two-term relationship, the second production factor is specified from the first production factor, and conversely, the first production factor is specified from the second production factor. Specifically, as shown in Fig. 3, the product P (arbitrary first production factor) and the assembly process h (second production factor) lying just below it are associated with each other as the manufacturing department information, so that respective production factors of the product P (parent) and the assembly process h (child) are linked with each other, and the plant β (arbitrary first production factor) and the product P (second production factor) lying just below it are associated with each other as the logistics department information, so that respective production factors of the plant β (parent) and the product P (child) are linked with each other. Incidentally, the three-term relationship among the product P, the assembly process h, and the part C, and the three-term relationship among the product P, the assembly process h, and the part D are stored in the relational database 17 as the manufacturing department information in Fig. 3, other than the two-term relationship between the product P and the assembly process h, the three-term relationship among the site β, the product P, and the site α, and the two-term relationship between the site α and the product P are stored therein as the logistics department information in Fig. 3, other than the two-term relationship between the plant β and the product P.

A symbol (P) for specifying the product P as a parent part number (first production factor), an item number PC001 (first factor-type number) for specifying the product and the part as a parent data classification (type of the production factor), a symbol (h) for specifying the assembly process h as a child part number (second production factor), and a process number PC003 (third factor-type number) for specifying the process as a child data classification (type of the production factor) are stored in the relational database 17 as the manufacturing department information (two-term relationship of the manufacturing department information). As a result of this, the product P and the assembly process h are connected with each other, and the product P and the assembly process h are linked with each other based on the two-term relationship. The symbol (P) for specifying the product P as the parent part number (first production factor), the item number PC001 (first factor-type number) for specifying the product as the parent data classification (type of the production factor), the symbol (h) for specifying the assembly process h as a middle part number (second production factor), the process number PC003 (third factor-type number) for specifying the process as a middle data classification (type of the production factor), a symbol (C) for specifying the part C as the child part number (third production factor), and the item number PC001 (first factor-type number) for specifying the part as the child data classification (type of the production factor) are stored in the relational database 17 (three-term relationship of the manufacturing department information). As a result of this, the product P, the assembly process h, and the part C are tied to each other, and the product P, the assembly process h, and the part C are linked with each other based on the three-term relationship. Further, the symbol (P) for specifying the product P as the parent part number (first production factor), the item number PC001 (first factor-type number) for specifying the product as the parent data classification (type of the production factor), the symbol (h) for specifying the assembly process h as the middle part number (second production factor), the process number PC003 (third factor-type number) for specifying the process as the middle data classification (type of the production factor), a symbol (D) for specifying the part D as the child part number (third production factor), and the item number PC001 (first factor-type number) for specifying the part as the child data classification (type of the production factor) are stored in the relational database 17 (three-term relationship of the manufacturing department information). As a result of this, the product P, the assembly process h, and the part D are tied to each other, and the product P, the assembly process h, and the part D are linked with each other based on the three-term relationship. It is to be noted that the product P, and the part C or the part D are not linked with each other in the two-term relationship.

A symbol (β) for specifying the plant β as the parent part number (first production factor), a site number PC004 (fourth factor-type number) for specifying the site as the parent data classification (type of the production factor), the symbol (P) for specifying the product P as the child part number (second production factor), and the item number PC001 (first factor-type number) for specifying the product and the part as the child data classification (type of the production factor) are stored in the relational database 17 as the logistics department information (two-term relationship of the logistics department information). As a result of this, the plant and the product P are tied to each other, and the plant β and the product P are linked with each other based on the two-term relationship. The symbol (β) for specifying the plant β as the parent part number (first production factor), the site number PC004 (fourth factor-type number) for specifying the site as the parent data classification (type of the production factor), the symbol (P) for specifying the product P as the middle part number (second production factor), the item number PC001 (first factor-type number) for specifying the product and the part as the middle data classification (type of the production factor), a symbol (α) for specifying the plant α as the child part number (third production factor), and the site number PC004 (fourth factor-type number) for specifying the site as the child data classification (type of the production factor) are stored in the relational database 17 (three-term relationship of the logistics department information). As a result of this, the plant β, the product P, and the plant α are tied to each other, and the plant β, the product P, and the plant α are linked with each other based on the three-term relationship. Further, the symbol (α) for specifying the plant α as the parent part number (first production factor), the site number PC004 (fourth factor-type number) for specifying the site as the parent data classification (type of the production factor), the symbol (P) for specifying the product P as the child part number (second production factor), and the item number PC001 (first factor-type number) for specifying the product and the part as the child data classification (type of the production factor) are stored in the relational database 17 (two-term relationship of the logistics department information). As a result of this, the plant α and the product P are tied to each other, and the plant α and the product P are linked with each other based on the two-term relationship. It is to be noted that the plant β and the plant α are not linked with each other in the two-term relationship.

In the integration of the two-term relationships, the computer 11 integrates into the two-term relationship between the product P and the assembly process h of the manufacturing department information the two-term relationship between the plant β and the product P of the logistics department information, which is different from that. Incidentally, the three-term relationship among the plant β, the product P, and the plant α intervenes between the two-term relationship between the plant β and the product P of the logistics department information, and the two-term relationship between the plant α and the product P thereof, so that the computer 11 ignores the two-term relationship between the plant α and the product P in the integration of the two-term relationships, and does not integrate the two-term relationship between the plant α and the product P of the logistics department information into the two-term relationship between the product P and the assembly process h of the manufacturing department information. The integration of the two-term relationships will be specifically described as follows.

The computer 11 extracts the two-term relationship between the product P and the assembly process h from the relational database 17 as the manufacturing department information as shown in Figs. 3 and 4, and also interprets the item number (PC001) of the parent data classification of the product P as an item data classification PC001 (first factor-type number) of the item database 13 to extract the product P from the item database 13, and interprets the process number (PC003) of the child data classification of the assembly process h as a process data classification PC003 (third factor-type number) of the process database 15 to extract the assembly process h from the process database 15.

Additionally, the computer 11 extracts the two-term relationship between the plant β and the product P from the relational database 17 as the logistics department information as shown in Figs. 3 and 4, and also interprets the site number (PC004) of the parent data classification of the plant β as a site data classification PC004 (fourth factor-type number) of the site database 16 to extract the plant β from the site database 16, and interprets the item number (PC001) of the child data classification of the product P as the item data classification PC001 (first factor-type number) of the item database 13 to extract the product P from the item database 13.

The computer 11 determines that the products P from the two-term relationship between the product P (data classification: PC001) and the assembly process h of the manufacturing department information, and the two-term relationship between the plant β and the product P (data classification: PC001) of the logistics department information are the same, based on the data classification (PC001) of the product P extracted from the relational database 17, and connects the plant β and the assembly process h linked with the product P around the product P based on the two-term relationship of the manufacturing department information and the two-term relationship of the logistics department information extracted from the relational database 17 to thereby integrate different types of two-term relationships (including different departments). Thereby, the production system in which the plant β, the product P, and the assembly process h are connected in series will be built.

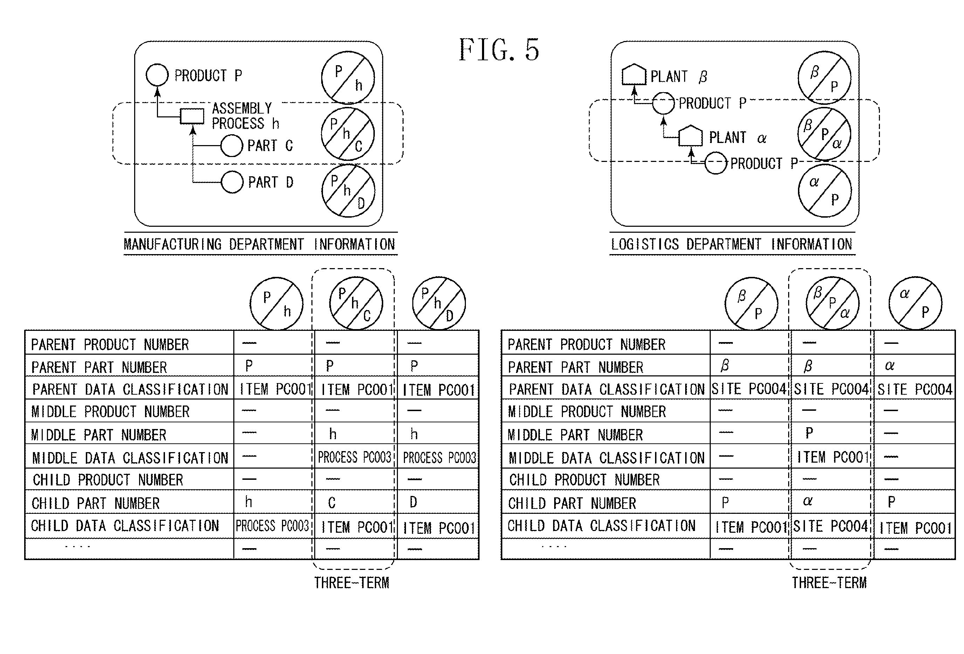

Fig. 5 is a view for describing the three-term relationship among the production factors stored in the relational database 17, while Fig. 6 is a view for describing the integration of different types of three-term relationships. In Fig. 5, the manufacturing department information and the logistics department information will be exemplified, and the three-term relationship used for the description will be shown within the dotted lines. The three-term relationship and the integration of different types of three-term relationships will be described as follows based on Figs. 5 and 6. In the three-term relationship (parent, middle, child relation), the production factors are linked by the arbitrary first production factor (parent), the second production factor (middle) lying just below the first production factor, and the third production factor (child) lying just below the second production factor. Based on the three-term relationship, the second production factor is specified from the first production factor, and the third production factor is specified from the first and second factors of production. Specifically, the product P (arbitrary first production factor) and the assembly process h (second production factor) lying just below it are associated with each other, and the assembly process h (second production factor) and the part C (third production factor) lying just below it are also associated with each other, as the manufacturing department information as shown in Fig. 5, so that respective production factors of the product P (parent), the assembly process h (middle), and the part C (child) are linked with each other. Meanwhile, the plant β (arbitrary first production factor) and the product P (second production factor) lying just below it are associated with each other, and the product P (second production factor) and the plant α (third production factor) lying just below it are also associated with each other, as the logistics department information, so that respective production factors of the plant β (parent), the product P (middle), and the plant α (child) are linked with each other. Incidentally, the two-term relationship between the product P and the assembly process h, and the three-term relationship among the product P, the assembly process h, and the part D are stored in the relational database 17 as the manufacturing department information in Fig. 5, other than the three-term relationship among the product P, the assembly process h, and the part C, and the two-term relationship between the plant β and the product P, and the two-term relationship between the site α and the product P are stored therein as the logistics department information in Fig. 3, other than the three-term relationship among the site β, the product P, and the site α.

The symbol (P) for specifying the product P as the parent part number (first production factor), the item number PC001 (first factor-type number) for specifying the product as the parent data classification (type of the production factor), the symbol (h) for specifying the assembly process h as the middle part number (second production factor), the process number PC003 (third factor-type number) for specifying the process as the middle data classification (type of the production factor), the symbol (C) for specifying the part C as the child part number (third production factor), and the item number PC001 (first factor-type number) for specifying the part as the child data classification (type of the production factor) are stored in the relational database 17 (three-term relationship of the manufacturing department information). As a result of this, the product P, the assembly process h, and the part C are tied to each other, and the product P, the assembly process h, and the part C are linked with each other based on the three-term relationship. Incidentally, since the two-term relationship between the product P and the assembly process h, and the three-term relationship among the product P, the assembly process h, and the part D stored in the relational database 17 are the same as those shown in Fig. 3, the description will be omitted.

The symbol (β) for specifying the plant β as the parent part number (first production factor), the site number PC004 (fourth factor-type number) for specifying the site as the parent data classification (type of the production factor), the symbol (P) for specifying the product P as the middle part number (second production factor), the item number PC001 (first factor-type number) for specifying the product and the part as the middle data classification (type of the production factor), the symbol (α) for specifying the plant α as the child part number (third production factor), and the site number PC004 (fourth factor-type number) for specifying the site as the child data classification (type of the production factor) are stored in the relational database 17 (three-term relationship of the logistics department information). As a result of this, the plant β, the product P, and the plant α are tied to each other, and the plant β, the product P, and the plant α are linked with each other based on the three-term relationship. Incidentally, since two-term relationship between the plant β and the product P, and the two-term relationship between the plant α and the product P stored in the relational database 17 are the same as those shown in Fig. 3, the description will be omitted.

The computer 11 extracts the two-term relationship between the product P and the assembly process h from the relational database 17, as shown in Figs. 5 and 6, interprets the item number (PC001) of the parent data classification of the product P as the item data classification PC001 (first factor-type number) of the item database 13 to extract the product P from the item database 13, and interprets the process number (PC003) of the child data classification of the assembly process h as the process data classification PC003 (third factor-type number) of the process database 15 to extract the assembly process h from the process database 15. The computer 11 extracts the three-term relationship among the product P, the assembly process h, and the part C from the relational database 17, interprets the item number (PC001) of the parent data classification of the product P as the item data classification PC001 (first factor-type number) of the item database 13 to extract the product P from the item database 13, interprets the process number (PC003) of the middle data classification of the assembly process h as the process data classification PC003 (third factor-type number) of the process database 15 to extract the assembly process h from the process database 15, and also interprets the item number (PC001) of the child data classification of the part C as the item data classification PC001 (first factor-type number) of the item database 13 to extract the part C from the item database 13. Here, the computer 11 determines the product P represented with the two-term relationship, and the product P represented with the three-term relationship to be the same production factor, and determines the assembly process h represented with the two-term relationship, and the assembly process h represented with the three-term relationship to be the same production factor.

In addition, the computer 11 extracts the two-term relationship between the plant β and the product P from the relational database 17, interprets the site number (PC004) of the parent data classification of the plant β as the site data classification PC004 (fourth factor-type number) of the site database 16 to extract the plant β from the site database 16, and interprets the item number (PC001) of the child data classification of the product P as the item data classification PC001 (first factor-type number) of the item database 13 to extract the product P from the item database 13. The computer 11 extracts the three-term relationship among the plant β, the product P, and the plant α from the relational database 17, interprets the site number (PC004) of the parent data classification of the plant β as the site data classification PC004 (fourth factor-type number) of the site database 16 to extract the plant β from the site database 16, and interprets the item number (PC001) of the middle data classification of the product P as the item data classification PC001 (first factor-type number) of the item database 13 to extract the product P from the item database 13, and also interprets the site number (PC004) of the child data classification of the plant α as the site data classification PC004 (fourth factor-type number) of the site database 16 to extract the plant α from the site database 16. The computer 11 extracts the two-term relationship between the plant α and the product P from the relational database 17, interprets the site number (PC004) of the parent data classification of the plant α as the item data classification PC004 (fourth factor-type number) of the site database 16 to extract the plant α from the site database 16, and interprets the item number (PC001) of the child data classification of the product P as the item data classification PC001 (first factor-type number) of the item database 13 to extract the product P from the item database 13.

Here, the computer 11 determines the plant α represented with the three-term relationship, and the plant α represented with the two-term relationship to be the same production factor. However, the product P among the plant β and the products P represented with the two-term relationship is located between the plant β and the plant α when being represented with the three-term relationship, so that the computer 11 does not determine that the product P among the plant β and the products P represented with the two-term relationship, and the product P among the plant α and the products P represented with the two-term relationship to be the same production factor. Further, the three-term relationship among the product P, the assembly process h, and the part C is located next to the two-term relationship between the product P and the assembly process h in the manufacturing department information, and the three-term relationship among the plant β, the product P, and the plant α intervenes between the two-term relationship between the plant β and the product P, and the two-term relationship between the plant α and the product P in the logistics department information, so that when integrating different type of three-term relationship among the plant β, the product P, and the plant α into the three-term relationship among the product P, the assembly process h, and the part C, the computer 11 ignores the two-term relationship between the plant β and the product P of the logistics department information, and does not use the two-term relationship between the plant β and the product P for the integration of the three-term relationship.

The computer 11 determines that the products P from the two-term relationship between the product P (data classification: PC001) and the assembly process h of the manufacturing department information, and the two-term relationship between the plant α and the product P (data classification: PC001) of the logistics department information are the same production factor, based on the data classification (PC001) of the product P extracted from the relational database 17, and integrates the three-term relationship of the manufacturing department information extracted from the relational database 17 and the three-term relationship of the logistics department information around the product P. Hence, around the product P, the three-term relationship among the plant β, the product P, and the plant α of the logistics department information is connected to the upper level of the product P, and the three-term relationship among the product P, the assembly process h, and the part C of the manufacturing department information is connected to the lower level of the product P, so that different types of three-term relationships (including different departments) are integrated. Thereby, the production system in which the site β, the product P, the site α, the product P, the assembly process h, and the part C are connected in series will be built.

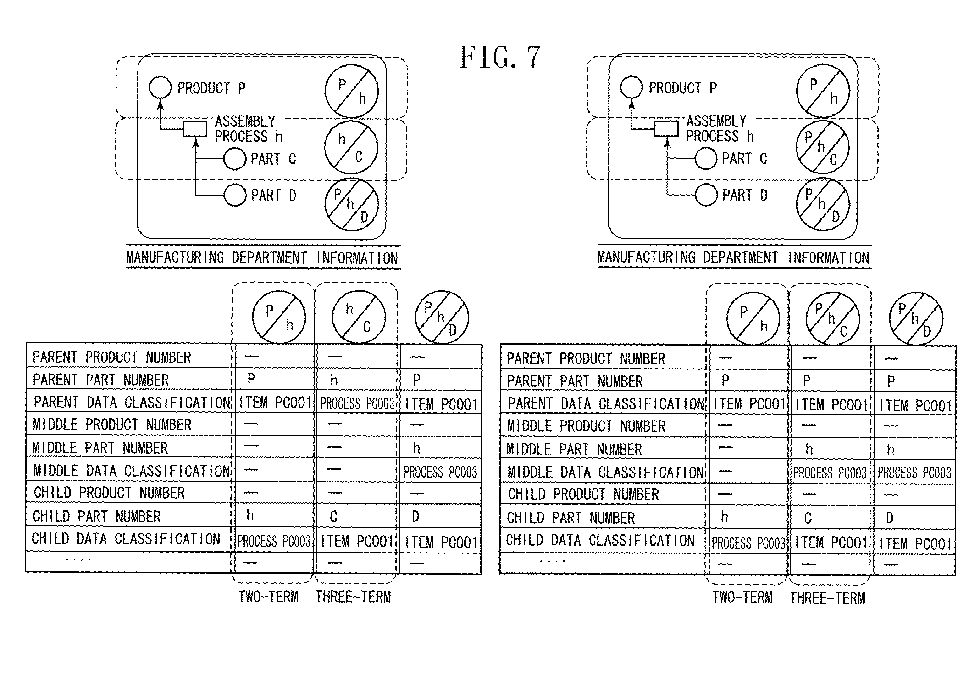

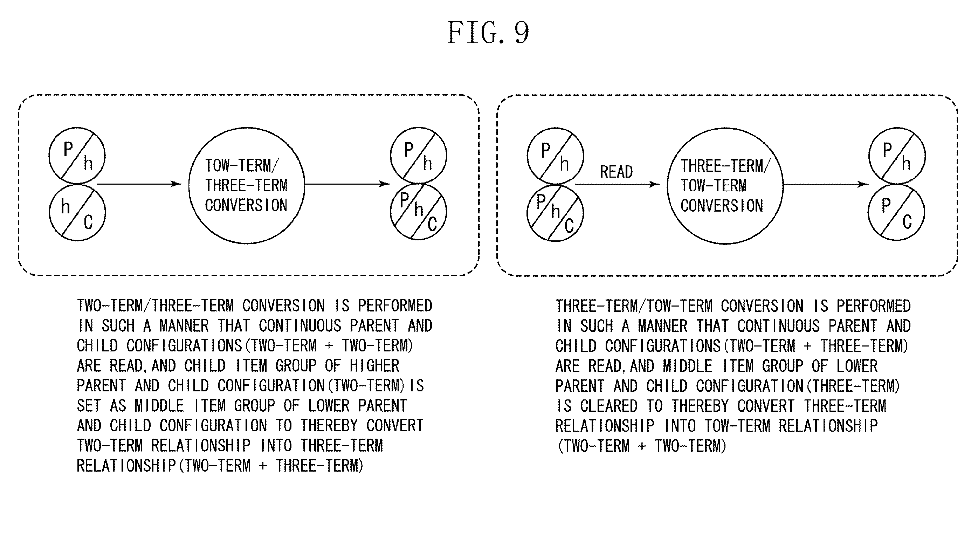

Fig. 7 is a view for describing the two-term relationship and the three-term relationship between and among the production factors stored in the relational database 17, while Fig. 8 is a view for describing the integration of the two-term relationship with the three-term relationship. Fig. 9 is a view for describing a two-term/three-term conversion, and a three-term/two-term conversion. In Fig. 7, the manufacturing department information will be exemplified, and the two-term relationship and the three-term relationship used for the description will be shown within the dotted lines. The integration of the two-term relationship and the three-term relationship, two-term/three-term conversion, and two-term/three-term conversion will be described based on Figs. 7 to 9 as follows. In the two-term relationship (child-parent relationship) shown in Fig. 7, as the manufacturing department information, the product P (arbitrary first production factor) and the assembly process h (second production factor) lying just below it are associated with each other, so that respective production factors of the product P (parent) and the assembly process h (child) are linked with each other, and the assembly process h (arbitrary first production factor) and the part C (second production factor) lying just below it are associated with each other, so that respective production factors of the assembly process h (parent) and the part C (child) are linked with each other. In the three-term relationship (parent, child, middle relationship) shown in Fig. 7, as the manufacturing department information, the product P (arbitrary first production factor) and the assembly process h (second production factor) lying just below it are associated with each other, and the assembly process h (second production factor) and the part C (third production factor) lying just below it are also associated with each other, so that respective production factors of the product P (parent), the assembly process h (middle), and the part C (child) are linked with each other.

The two-term relationship between the product P and the assembly process h is stored in the relational database 17, and the two-term relationship between the assembly process h and the part C is stored therein. Further, the three-term relationship among the product P, the assembly process h, and the part C is stored therein. In the two-term relationship shown in Fig. 7, the symbol (P) for specifying the product P as the parent part number (first production factor), the process number PC001 (first factor-type number) for specifying the product as the parent data classification (type of the production factor), the symbol (h) for specifying the assembly process h as the child part number (second production factor), and the process number PC003 (third factor-type number) for specifying the process as the child data classification (type of the production factor) are stored. Further, the symbol (h) for specifying the assembly process h as the parent part number (first production factor), the item number PC003 (third factor-type number) for specifying the process as the parent data classification (type of the production factor), the symbol (C) for specifying the part C as the child part number (second production factor), and the item number PC001 (first factor-type number) for specifying the part as the child data classification (type of the production factor) are stored. Thereby, the product P and the assembly process h are tied to each other, and the product P and the assembly process h are linked with each other based on the two-term relationship, and the assembly process h and the part C are tied to each other, and the assembly process h and the part C are linked with each other based on the two-term relationship.

In the three-term relationship shown in Fig. 7, the symbol (P) as the parent part number (first production factor), the item number PC001 (first factor-type number) as the parent data classification (type of the production factor), the symbol (h) as the middle part number (second production factor), the process number PC003 (third factor-type number) as the middle data classification (type of the production factor), the symbol (C) as the child part number (third production factor), and the item number PC001 (first factor-type number) as the child data classification (type of the production factor) are stored, similar to that shown in Fig. 5. Thereby, the product P, the assembly process h, and the part C are tied to each other, and the product P, the assembly process h, and the part C are linked based on the three-term relationship.

The computer 11 extracts the two-term relationship between the product P and the assembly process h from the relational database 17 as shown in Fig. 8, extracts the two-term relationship between the assembly process h and the part C, and also extracts the three-term relationship among the product P, the assembly process h, and the part C. Further, it interprets the item number (PC001) of the parent data classification of the product P as the item data classification PC001 (first factor-type number) of the item database 13 to extract the product P from the item database 13, interprets the process number (PC003) of the middle data classification of the assembly process h as the process data classification PC003 (third factor-type number) of the process database 15 to extract the assembly process h from the process database 15, and also interprets the item number (PC001) of the child data classification of the part C as the item data classification PC001 (first factor-type number) of the item database 13 to extract the part C from the item database 13.

The computer 11 determines the product P of the manufacturing department information, and the product P of the logistics department information to be the same production factor based on the data classification (PC001) of the product P extracted from the relational database 17, and also determines the assembly process h of the manufacturing department information and the assembly process h of the logistics department information to be the same production factor based on the data classification (PC003) of the assembly process h extracted from the relational database 17. Next, the computer 11 connects the product P and the part C linked with the assembly process h around the assembly process h by letting the assembly process h which is the second production factor (child) of the two-term relationship be the second production factor (middle) of the three-term relationship, and the part C thereof be the third production factor (child) of the three-term relationship based on the two-term relationship of the manufacturing department information and the three-term relationship of the logistics department information extracted from the relational database 17, to thereby integrate the two-term relationship and the three-term relationship. Thereby, the production system in which the product P, the assembly process h, and the part C are connected in series will be built.

In order for the computer 11 to convert the two-term relationship into the three-term relationship, it is performed by means of reading continuous two two-term relationships from the relational database 17, setting the second production factor of the higher level two-term relationship as the second production factor of the lower level two-term relationship, and setting the second production factor of the lower level two-term relationship as the third production factor, as shown in Fig. 9 (two-term/three-term converting means). In order for the computer 11 to convert the three-term relationship into the two-term relationship, it is performed by means of reading continuous two-term relationship and three-term relationship from the relational database 17, and deleting the second production factor of the lower level three-term relationship (three-term/two-term converting means).

One example for building the production system of the finished product shown in Fig. 1 based on the two-term relationship and the three-term relationship is as follows. When formation of the production system is instructed via the input device, the computer 11 extracts the plant β, the product P, the plant α, the assembly drawing a, the assembly process h, the part C, and the part D from the various factor-type databases 13, 14, 15, and 16, and also extracts the two-term relationship and the three-term relationship from the relational database 17. The computer 11 connects the product P and the assembly process h lying just below it in series according to the two-term relationship, connects the product P and the assembly drawing a lying just below it in series according to the two-term relationship, and also integrates different types of two-term relationships to thereby form the production system in which the product P and the assembly process h are connected to each other, and the product P and the assembly drawing a are connected to each other. Further, it connects the product P, the assembly process h, and the part C in series according to the three-term relationship, connects the product P, the assembly process h, and the part D in series according to the three-term relationship, and also integrates the two-term relationship and the three-term relationship to thereby form the production system in which the product P, process h, and the part C are connected to each other, and the product P, the assembly process h, and the part D are connected to each other. In addition, it connects the plant β, the product P, and the plant α in series according to the three-term relationship, integrates different types of three-term relationships, and finally, builds the production system in which respective production factors of the plant β, the product P, the plant α, the product P, the assembly drawing a, the assembly process h, the part C, and the part D are connected in series (production system building means). The computer 11 stores the whole formed production system in the storage unit (production system storing means). The computer 11 displays the whole formed production system via the display, and prints the whole production system via the printer (production system outputting means).

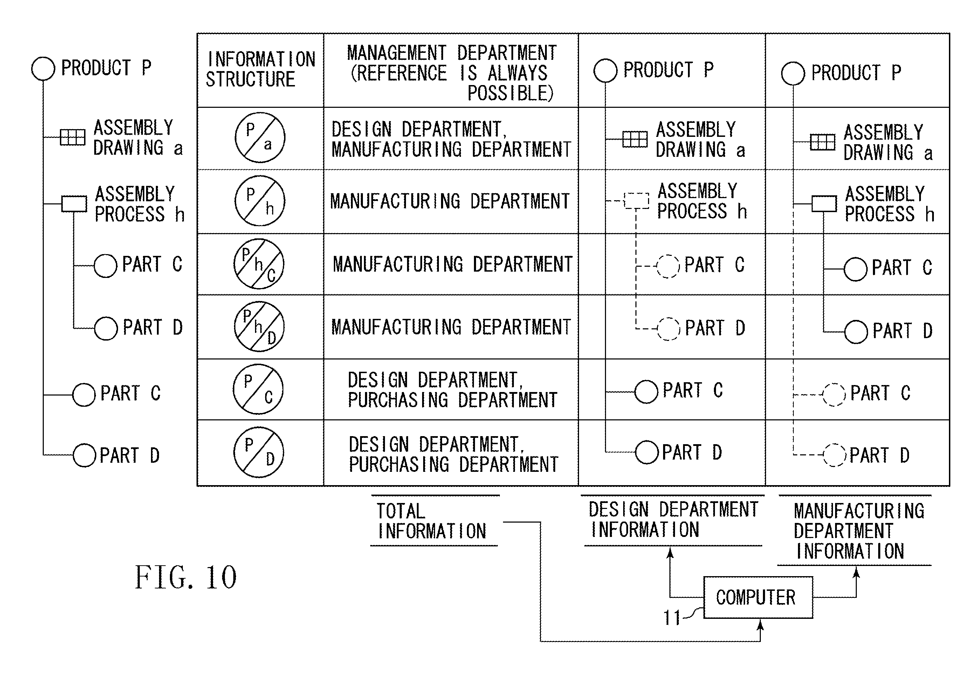

Fig. 10 is a view showing the production system outputted by department. In Fig. 10, only the production factors connected with the solid lines are outputted from the output device arranged in each of the departments 18, 19, 20, and 21, whereas the production factors connected with the dotted lines are not outputted in principle. The computer 11 transfers the whole production system to the terminal device arranged in each of the departments 18, 19, 20, and 21, causes the display arranged in each department to display the departmental production system formed only from the required production factors for every department based on the departmental number (production system outputting means), and causes the printer arranged in each department to print the departmental production system (production system outputting means). For example, only the production system of the finished product formed of the product P, the assembly drawing a, the part C, and the part D is displayed on the display arranged in the design department 18, as shown in Figs. 1 and 10. Only the production system of the finished product formed of the product P, the assembly drawing a, the assembly process h, the part C, and the part D is displayed on the display arranged in the manufacturing department 19. Meanwhile, only the production system of the finished product formed of the product P, the part C, and the part D is displayed on the display arranged in the purchasing department 20. Only the production system of the finished product formed of the plant α, the product P, the plant β, and the product P is displayed on the display arranged in the logistics department 21.

The production management system 10 and the production management method extract each production factor required for building the production system from a plurality of factor-type databases 13, 14, 15, and 16 in which the production factors are classified and stored for every type thereof and also extract the two-term relationship and the three-term relationship from the relational database 17, and performs the integration of different types of two-term relationships, the integration of different types of three-term relationships, and the integration of the two-term relationship with the three-term relationship and connects the production factors extracted from the factor-type databases 13, 14, 15, and 16 in series from a superordinate concept toward a subordinate concept thereof according to the two-term relationship and the three-term relationship, to thereby build the production system corresponding to each finished product, so that it is not necessary for each of the departments 18, 19, 20, and 21 to individually manage each production factor, and for each of the departments 18, 19, 20, and 21 to uniquely form the production system, thus making it possible to save the useless time and labor due to building a huge number of production systems which are different for every department of 18, 19, 20, and 21. The production management system 10 and the production management method can form the production system that can be shared by each of the departments 18, 19, 20, and 21 based on each of the production factors stored in the factor-type databases 13, 14, 15, and 16 and the two-term relationship and the three-term relationship stored in the relational database 17, while each of the departments 18, 19, 20, and 21 shares the factor-type databases 13, 14, 15, and 16 and the relational database 17, so that the production system can be managed in an integrated fashion, and also the built production system can be provided to each of the departments 18, 19, 20, and 21 in real time.

Note herein that, if the production system is built only by the two-term relationship, a plurality of second production factors whose factor-type is different from that of the first production factor may be linked just below the first production factor to thereby build a plurality of different production systems to the same finished product, and thus the production system for every specific condition cannot be represented. In the production management system 10 and the production management method, however, by adding the three-term relationship to the two-term relationship, the specific second production factor is linked just below the first production factor and the specific third production factor is also linked just below the second production factor, so that only the production system of a specific condition corresponding to each finished product can be built using these production factors.

In the production management system 10 and the production management method, since each of the production factors is classified into various factor-type databases 13, 14, 15, and 16 based on the first to fourth factor-type numbers given thereto and is stored in these factor-type databases 13, 14, 15, and 16, it is possible to group each of the production factors for every factor-type according to these databases 13, 14, 15, and 16 to manage them in an integrated fashion, thus making it possible to save the time and the labor required for each of the departments 18, 19, 20, and 21 to manage these production factors individually. Further, in the production management system 10 and the production management method, converting the two-term relationship into the three-term relationship after storing the two-term relationship in the relational database 17 allows to easily form the three-term relationship among the production factors from the two-term relationship, thus making it possible to save the time and labor required for forming only the three-term relationship from the start.

In the system 10, each of the production factors stored in the factor-type databases 13, 14, 15, and 16 can be altered via the input device, and the first to third production factors stored in the relational database 17 can be altered. The alteration of the production factors and the alteration of the first to third production factors include change, deletion, and addition thereof. In the system 10, for example, the part C can be changed to the part D, the assembly process h can be changed to the assembly process i, the part D is changed to the assembly process h, and the assembly process h can be changed to the part C. In addition, the product Q, the plant γ, the assembly drawing b, the assembly process i, the part A, or the like can be added.

One example of change of the production factors stored in the factor-type databases 13, 14, 15, and 16 will be described as follows using a case of changing from the product P to the product Q as an example. The product P before the change is inputted into an old item area among production factor change areas displayed on the display, the product Q after the change is inputted into a new item area, and the department classification of the product Q after the change is also inputted into a departmental area. When the change instruction of the production factor is inputted from the input device, the computer 11 will delete the product data before the change from the item database 13, apply the first factor-type number and the departmental number to the product Q after the change, and subsequently store the product data (product Q) after the change in the item database 13 based on the first factor-type number.

One example of change of the first production factor stored in the relational databases 17 will be described as follows using a case of changing from the product P to the product Q as an example. The product P before the change is inputted into an old relational area among relation change areas displayed on the display, and the product Q after the change is inputted into a new relational area. When the change instruction of the two-term relationship is inputted from the input device, the computer 11 will change the two-term relationship between the product P and the assembly process h to the two-term relationship between the product Q and the assembly process h. When the two-term relationship is changed, a symbol (Q) for specifying the product Q as the parent part number (first production factor), the item number PC001 (first factor-type number) for specifying the product as the parent data classification (type of the production factor), the symbol (h) for specifying the assembly process h as the child part number (second production factor), and the process number PC003 (third factor-type number) for specifying the process as the child data classification (type of the production factor) are stored in the relational database 17. As a result of this, the product Q and the assembly process h are tied to each other, and the product Q and the assembly process h are linked with each other based on the two-term relationship.

Another example of change of the production factors stored in the factor-type databases 13, 14, 15, and 16 will be described as follows using a case of changing the assembly process h to the assembly process i, and changing the part C to the part E as an example. The assembly process h before the change is inputted into an old process area among the production factor change areas displayed on the display, the part C before the change is inputted into the old item area, and the assembly process i after the change is also inputted into a new process area and part E after the change is inputted into the new item area. Further, the department classification of the assembly process i and the part E after the change is inputted into the departmental area. When the change instruction of the production factor is inputted from the input device, the computer 11 will delete the assembly process data (assembly process h) before the change from the process database 15, apply the third factor-type number and the departmental number to the assembly process i after the change, and subsequently store the assembly process data (assembly process i) after the change in the process database 15 based on the third factor-type number and further, will delete the part data (part C) before the change from the item database 13, apply the first factor-type number and the departmental number to the part E after the change, and subsequently store the part data (part E) after the change in the item database 13 based on the first factor-type number.

One example of change of the second and third production factors stored in the relational databases 17 will be described as follows using a case of changing the assembly process h to the assembly process i and changing the part C to the part E as an example. The assembly process h and the part C before the change are inputted into the old relational area among the relation change areas displayed on the display, and the assembly process i and the part E after the change are inputted into the new relational area. When the change instruction of the three-term relationship is inputted from the input device, the computer 11 will change the three-term relationship formed of the product P, the assembly process h, and the part C to the three-term relationship formed of the product P, the assembly process i, and the part E. When the three-term relationship is changed, the symbol (P) for specifying the product P as the parent part number (first production factor), the item number PC001 (first factor-type number) for specifying the product and the part as the parent data classification (type of the production factor), a symbol (i) for specifying the assembly process i as the middle part number (second production factor), the process number PC003 (third factor-type number) for specifying the process as the middle data classification (type of the production factor), a symbol (E) for specifying the part E as the child part number (third production factor), and the item number PC001 (first factor-type number) for specifying the part as the child data classification (type of the production factor) are stored in the relational database 17. As a result of this, the product P, the assembly process i, and the part E are tied to each other, and the product P, the assembly process i, and the part E are linked with each other based on the three-term relationship.

When the forming instruction of the production system is inputted from the input device after changing the production factors according to the aforementioned procedure, the computer 11 will extract the production factors (including the production factors after the change) required for building the production system, from the factor-type databases 13, 14, 15, and 16 and also extract a new two-term relationship and three-term relationship formed of the first to third production factors after the change, from the relational database 17, perform the integration of different types of two-term relationships, the integration of different types of three-term relationships, and the integration of the two-term relationship with the three-term relationship, and connect each of the production factors in series from the superordinate concept toward the subordinate concept thereof according to the new two-term relationship and three-term relationship to thereby rebuild the production system of the finished product (production system building means). The computer 11 stores in the storage unit the whole production system rebuilt by the change of the production factor (production system storing means). The computer 11 displays the whole rebuilt production system via the display, and prints the whole rebuilt production system via the printer (production system outputting means). Meanwhile, the computer 11 transfers the whole production system to the terminal device arranged in each of the departments 18, 19, 20, and 21, causes the display arranged in each of the departments 18, 19, 20, and 21 to display the rebuilt departmental production system formed only of the required production factors for every department of 18, 19, 20, and 21 based on the departmental number (production system outputting means), and causes the printer arranged in each of the departments 18, 19, 20, and 21 to print the rebuilt departmental production system (production system outputting means).

One example of addition of the production factors stored in the factor-type databases 13, 14, 15, and 16 will be described as follows using a case of adding the assembly process j as an example. The part C is inputted into the former area among the production factor addition areas displayed on the display, the assembly process j is inputted into the addition area, and the department classification of the assembly process j to be added is also inputted into the departmental area. When the addition instruction of the production factor is inputted from the input device, the computer 11 applied the third factor-type number and the departmental number to the added assembly process j to then store the process data (assembly process j) to be added in the process database 15 based on the third factor-type number. In the addition of the production factor, the two-term relationship between the part C and the assembly process j is inputted into the relational area displayed on the display. The computer 11 stores the two-term relationship between the part C and the assembly process j in the relational database 17. The symbol (C) for specifying the part C as the parent part number (first production factor), the item number PC001 (first factor-type number) for specifying the part as the parent data classification (type of the production factor), a symbol (j) for specifying the assembly process j as the child part number (second production factor), and the process number PC003 (third factor-type number) for specifying the process as the child data classification (type of the production factor) are stored in the relational database 17. As a result of this, the part C and the assembly process j are tied to each other, and the part C and the assembly process j are linked with each other based on the two-term relationship.

Another example of addition of the production factors stored in the factor-type databases 13, 14, 15, and 16 will be described as follows using a case of adding the assembly process j and the part F as an example. The part C is inputted into the former area among the production factor addition areas displayed on the display, the assembly process j and the part F are inputted into the addition area, and the department classification of the assembly process j and the part F to be added is also inputted into the departmental area. When the addition instruction of the production factor is inputted from the input device, the computer 11 will apply the third factor-type number and the departmental number to the added assembly process j to then store the process data (assembly process j) to be added in the result database 14 based on the third factor-type number, and apply the first factor-type number and the departmental number to the added part F to then store the part data (part F) to be added in the item database 13 based on the first factor-type number. In the addition of the production factor, the three-term relationship among the part C, the assembly process j, and the part F is inputted into the relational area displayed on the display. The computer 11 stores the three-term relationship among the part C, the assembly process j, and the part F in the relational database 17. Meanwhile, the computer 11 can also convert the three-term relationship among the part C, the assembly process j, and the part F by the two-term/three-term converting means when the two-term relationship between the part C and the assembly process j, and the two-term relationship between the assembly process j and the part F are inputted. The symbol (C) for specifying the part C as the parent part number (first production factor), the item number PC001 (first factor-type number) for specifying the part as the parent data classification (type of the production factor), the symbol (j) for specifying the assembly process j as the middle part number (second production factor), the process number PC003 (third factor-type number) for specifying the process as the middle data classification (type of the production factor), a symbol (F) for specifying the part F as the child part number (third production factor), and the process number PC001 (first factor-type number) for specifying the part as the child data classification (type of the production factor) are stored in the relational database 17. As a result of this, the part C, the assembly process j, and the part F are tied to each other, and the part C, the assembly process j, and the part F are linked with each other based on the three-term relationship.

When the forming instruction of the production system is inputted from the input device after adding the production factors according to the aforementioned procedure, the computer 11 will extract the production factors (including the added production factors) required for building the production system from the factor-type databases 13, 14, 15, and 16 and also extract the new two-term relationship and three-term relationship formed of the first to third production factors after adding the production factors, from the relational database 17, perform the integration of different types of two-term relationships, the integration of different types of three-term relationships, and the integration of the two-term relationship with the three-term relationship, and connect each of the production factors in series from the superordinate concept toward the subordinate concept thereof according to the new two-term relationship and three-term relationship to thereby rebuild the production system of the finished product (production system building means). The computer 11 stores the whole production system rebuilt by the addition of the production factor, in the storage unit (production system storing means). The computer 11 displays the whole rebuilt production system via the display, and prints the whole rebuilt production system via the printer (production system outputting means). Meanwhile, the computer 11 transfers the whole production system to the terminal device arranged in each of the departments 18, 19, 20, and 21, causes the display arranged in each of the departments 18, 19, 20, and 21 to display the rebuilt departmental production system formed only of the required production factors for every department of 18, 19, 20, and 21 based on the departmental number (production system outputting means), and causes the printer arranged in each of the departments 18, 19, 20, and 21 to print the rebuilt departmental production system (production system outputting means).

One example of deletion of the production factors stored in the factor-type databases 13, 14, 15, and 16 will be described as follows using a case of deleting the part D as an example. The part D is inputted into a deletion area among production factor addition areas displayed on the display. When the deletion instruction of the production factor is inputted from the input device, the computer 11 will delete the part D from the item database 13. Further, when the product P, the assembly process h, and the part D have formed the three-term relationship, the three-term relationship among the product P, the assembly process h, and the part D is converted into the two-term relationship between the product P and the assembly process h by the three-term/two-term converting means.

When the forming instruction of the production system is inputted from the input device after deleting the production factor according to the aforementioned procedure, the computer 11 will extract the production factors (excluding the deleted production factors) required for building the production system, from the factor-type databases 13, 14, 15, and 16 and also extract the new two-term relationship and three-term relationship formed of the first to third production factors after deleting the production factors, from the relational database 17, perform the integration of different types of two-term relationships, the integration of different types of three-term relationships, and the integration of the two-term relationship with the three-term relationship, and connect each of the production factors in series from the superordinate concept toward the subordinate concept thereof according to the new two-term relationship and three-term relationship to thereby rebuild the production system of the finished product (production system building means). The computer 11 stores the whole production system rebuilt by the deletion of the production factor, in the storage unit (production system storing means). The computer 11 displays the whole rebuilt production system via the display, and prints the whole rebuilt production system via the printer (production system outputting means). Meanwhile, the computer 11 transfers the whole production system to the terminal device arranged in each of the departments 18, 19, 20, and 21, causes the display arranged in each of the departments 18, 19, 20, and 21 to display the rebuilt departmental production system formed only of the required production factors for every department of 18, 19, 20, and 21 based on the departmental number (production system outputting means), and causes the printer arranged in each of the departments 18, 19, 20, and 21 to print the rebuilt departmental production system (production system outputting means).

In the production management system 10 and the production management method, the alteration of the production factors can be managed in an integrated fashion by these factor-type databases 13, 14, 15, and 16, and the alteration of the first to third production factors can be managed in an integrated fashion by the relational database 17. In the production management system 10 and the production management method, the production system that can be shared by each department can be easily formed according to the two-term relationship and the three-term relationship formed of the altered first to third production factors, while using the altered production factors. Moreover, in the production management system 10 and the production management method, it is not necessary to rebuild the production system by altering the production factors and the first to third production factors for every department of 18, 19, 20, and 21, and thus making it possible to save the time and labor required for each of the departments 18, 19, 20, and 21 to alter the production factors and to alter the first to third production factors.

## Claims

1. A production management system that builds a production system of a finished product from a combination of various production factors, the factor branching into a plurality of factors from a superordinate concept toward a subordinate concept, wherein
the production factors are linked with each other by an upper/lower two-term relationship between an arbitrary first production factor and a second production factor lying just below the first production factor and also linked with each other by an upper/lower three-term relationship among the first and second production factors, and a third production factor lying just below the second production factor,
the system comprises a plurality of factor-type databases that classify and store the production factors for every factor-type, and a relational database that stores the two-term relationship and the three-term relationship, and uses the production factors to execute production system building means for building a production system of each finished product, and
the production system building means extracts each of the production factors required for building the production system, from the factor-type databases, and connects these production factors extracted from the factor-type databases in series from the superordinate concept toward the subordinate concept thereof, according to the two-term relationship and the three-term relationship stored in the relational database to thereby form the production system corresponding to each finished product.

2. The production management system according to claim 1, wherein first to n-th factor-type numbers for specifying a type of the production factor are individually given to these production factors, the factor-type database is classified into first to n-th factor-type databases corresponding to the first to n-th factor-type numbers, these production factors are stored in the first to n-th factor-type databases based on the first to n-th factor-type numbers, and the production system building means extracts each of the production factors required for building the production system from the first to n-th factor-type databases based on the first to n-th factor-type numbers.

3. The production management system according to claim 1 or 2, wherein the system comprises production system storing means for storing the production system built by the production system building means, and production system outputting means for outputting the built production system.

4. The production management system according to claim 3, wherein the departmental numbers for sorting the production factors by department are individually given to these production factors, and the production system outputting means outputs the departmental production system formed only of the required production factors for every department based on the departmental number.

5. The production management system according to any one of claims 1 to 4, wherein in the system, the production factors stored in the factor-type databases can be altered and the first to third production factors stored in the relational database can be altered, and when the production factors and the first to third production factors are altered, the production system building means uses altered new production factors to rebuild a production system of each finished product according to a new two-term relationship and three-term relationship formed of altered first to third production factors.

6. The production management system according to any one of claims 2 to 5, wherein the system comprises two-term/three-term converting means for converting the two-term relationship stored in the relational database into the three-term relationship, and three-term/two-term converting means for converting the three-term relationship stored in the relational database into the two-term relationship.

7. A production management method that builds a production system of a finished product from a combination of various production factors, the factor branching into a plurality of factors from a superordinate concept toward a subordinate concept, wherein the production management method extracts each of the production factors required for building the production system from a plurality of factor-type databases in which the production factors are classified and stored for every type thereof, extracts a two-term relationship from a relational database in which the two-term relationship between the production factors linked with each other by an upper/lower two-term relationship between an arbitrary first production factor and a second production factor lying just below the first production factor is stored and also extracts a three-term relationship from the relational database in which the three-term relationship among the production factors linked with each other by an upper/lower three-term relationship among the first and second production factors, and a third production factor lying just below the second production factor is stored, connects these production factors extracted from the factor-type databases in series from a superordinate concept toward a subordinate concept thereof according to the two-term relationship and the three-term relationship to thereby build the production system corresponding to each finished product, and stores and outputs the built production system.

8. The production management method according to claim 7, wherein first to n-th factor-type numbers for specifying a type of the production factor are individually given to these production factors, the factor-type database is classified into first to n-th factor-type databases corresponding to the first to n-th factor-type numbers, these production factors are stored in the first to n-th factor-type databases based on the first to n-th factor-type numbers, and the production management method extracts each of the production factors required for building the production system from the first to n-th factor-type databases based on the first to n-th factor-type numbers.

9. The production management method according to claim 7 or 8, wherein the departmental numbers for sorting the production factors by department are individually given to these production factors, and the production management method outputs the departmental production system formed only of the required production factors for every department based on the departmental number.

10. The production management method according to any one of claims 7 to 9, wherein in the production management method, the production factors stored in the factor-type databases can be altered and the first to third production factors stored in the relational database can be altered, and when the production factors and the first to third production factors are altered, altered new production factors are used to rebuild a production system of each finished product according to a new two-term relationship and three-term relationship formed of altered first to third production factors.

11. The production management method according to any one of claims 7 to 10, wherein the production management method converts the two-term relationship stored in the relational database into the three-term relationship, and also converts the three-term relationship stored in the relational database into the two-term relationship.

12. A computer-readable storage medium for storing a production management program for causing a computer to execute a production management method that builds a production system of a finished product from a combination of various production factors, the factor branching into a plurality of factors from a superordinate concept toward a subordinate concept, wherein the production management method extracts each of the production factors required for building the production system from a plurality of factor-type databases in which the production factors are classified and stored for every type thereof, extracts a two-term relationship from a relational database in which the two-term relationship between the production factors linked with each other by an upper/lower two-term relationship between an arbitrary first production factor and a second production factor lying just below the first production factor is stored and also extracts a three-term relationship from the relational database in which the three-term relationship among the production factors linked with each other by an upper/lower three-term relationship among the first and second production factors, and a third production factor lying just below the second production factor is stored, connects these production factors extracted from the factor-type databases in series from a superordinate concept toward a subordinate concept thereof according to the two-term relationship and the three-term relationship to thereby build the production system corresponding to each finished product, and stores and outputs the built production system.

13. The computer-readable storage medium according to claim 12, wherein the computer-readable storage medium stores the production management program for causing the computer to execute the production management method that extracts each of the production factors required for building the production system from the first to n-th factor-type databases based on the first to n-th factor-type numbers for specifying a type of the production factor.

14. The computer-readable storage medium according to claim 12 or 13, wherein the computer-readable storage medium stores the production management program for causing the computer to execute the production management method that outputs the departmental production system formed only of the required production factors for every department based on the departmental number for sorting the production factors by department.

15. The computer-readable storage medium according to any one of claims 12 to 14, wherein the computer-readable storage medium stores the production management program for causing the computer to execute the production management method in which when the production factors and the first to third production factors are altered, altered new production factors are used to rebuild a production system of each finished product according to a new two-term relationship and three-term relationship formed of altered first to third production factors.

16. The computer-readable storage medium according to any one of claims 12 to 15, wherein the computer-readable storage medium stores the production management program for causing the computer to execute the production management method that converts the two-term relationship stored in the relational database into the three-term relationship, and also converts the three-term relationship stored in the relational database into the two-term relationship.
